# EUROPEAN PATENT APPLICATION

(11) **EP 1 852 989 A1**
(43) Date of publication of application: **07.11.2007**
(21) Application number: 06711742.4
(22) Date of filing: 16.01.2006
(51) Int. Cl.: H04H 9/00, G06F 13/00, H04H 1/00, H04N 7/173, H04N 17/00

(54) **VIEWING RATE REPORT SYSTEM AND VIEWING RATE REPORT METHOD**

(30) Priority: 17.01.2005 JP 2005008898
(71) Applicant: Softbank BB Corp., Tokyo 105-7304 (JP)
(72) Inventor: Hayato, Kameta, Minato-ku, Tokyo 105-7304 (JP)
(74) Representative: Grünecker, Kinkeldey, Stockmair & Schwanhäusser Anwaltssozietät
(86) International application number: PCT/JP2006/300462
(87) International publication number: WO 2006/075747

(57) **Abstract**

A viewing rate report system includes: a net content acquisition unit 14 for acquiring a content distributed by a television tuner unit 11 receiving a broadcast content broadcasted via a radio wave and an IP network 4; a combination output unit 18 for outputting a content assigned to a selected channel by a monitor 1a; a viewing channel report unit 134 for transmitting a channel identifier for identifying a broadcast content outputted from the combination output unit 18 or a net content via the IP network 4; and a viewing rate report unit 58 arranged on the IP network 4, collecting channel identifiers transmitted from a plurality of viewing channel report units 134, calculating the viewing rate, and reporting information on the calculated viewing rate via the IP network 4.

## Description

### Technical Field

The present invention relates to a viewing rate report system and a viewing rate report method for use in a television broadcast viewing system of integrating and outputting broadcast content, which is distributed via radio waves such as ground wave broadcasting or satellite broadcasting, and network content, which is distributed through an IP network such as the Internet.

### Background Art

In the prior art, a ground wave broadcast, a satellite broadcast or the like is viewed and listened by receiving broadcast radio waves with a dedicated receiver and outputting pictures and sounds. On the other hand, with the advent of the Internet technology, it becomes possible to browse Web sites through the Internet and deliver image content by streaming.

Incidentally, since the above broadcast content is delivered by radio waves which are broadcasted in a unilateral way from broadcast stations, the broadcast content can only passively be viewed and listened on the receiver side. Contrary to this, in the case of the content delivered through the Internet, it is possible to provide a variety of services through bidirectional communications.

Taking into consideration the above circumstances, so far, it has been proposed that a television video signal provided from a wired television broadcast network such as a cable television is put (superimposed) on delivery data delivered through the Internet from the wired television broadcast network for displaying the superimposed picture (for example, refer to Patent Document 1).

However, in the case of the viewing style of combining the television broadcast as described above and the delivery data delivered through the Internet, the number of channels is so large that the user feels difficulty in selecting which channel is to be viewed.
Patent Document 1: Japanese Patent Published Application No. 2002-171458

### Disclosure Of The Invention

Accordingly, taking into consideration the above circumstances, it is an object of the present invention to provide a viewing rate report system and a viewing rate report method in which it is possible to calculate and report the viewing rate in real time in the viewing method combining the distribution information distributed from the Internet and easily select a program or content to be viewed by a user.

In order to accomplish the object as described above, the present invention is directed to a system for reporting a viewing rate in a television broadcast viewing system for viewing and listening video and sound by a terminal device provided with a display unit, comprising: a television tuner unit operable to receive broadcast content which is broadcasted through radio waves; a combination output unit operable to output on the display unit the broadcast content or network content assigned to the channel which is selected; a viewing channel report unit operable to transmit through the IP network a channel identifier for identifying the broadcast content or network content which is output from the combination output unit; and a viewing rate report unit located on the IP network and operable to collect the channel identifier transmitted from a plurality of viewing channel report units, calculate the viewing rate, report information on the viewing rate as calculated through the IP network.

In accordance with the present invention as described above, while receiving broadcast content which is broadcasted through radio waves, and acquiring network content which is distributed through an IP network, the broadcast content or network content assigned to the channel which is selected by the user is output on the display unit. Then, a channel identifier for identifying the broadcast content or network content, which is output from the display unit, is transmitted through the IP network. The channel identifiers transmitted from a plurality of viewing channel report units on the IP network are collected to calculate the viewing rate. The information on the viewing rate as calculated is reported through the IP network.

In accordance with the present invention as described above, it is possible to integrate and output broadcast content, which is distributed via radio waves, and network content, which is distributed through an IP network so that the user can view desired content by selection manipulation of the channel. In this case, it is possible to collect the channel (content) each user is viewing to calculate the viewing rate and report the viewing rate to the respective users, and therefore each user can select a channel to be viewed on the basis of the viewing rate.

In the invention as described above, the network content acquisition unit preferably acquires the information on the viewing rate which is reported by the viewing rate report unit, and outputs the information to the combination output unit as the network content. In this case, the user can view the information on the viewing rate as a program, and easily acquire the information on the viewing rate by selecting the channel assigned to the viewing rate report program.

In the invention as described above, it is preferred to provide a viewing rate output unit operable to display a list of the viewing rate in association with channels; and a channel switching unit operable to switch the content to be output from the combination output unit on the basis of the user manipulation of selecting a channel from the list as displayed. In this case, the viewing rate as reported is displayed in a list by means of a bar graph, a circle graph or the like in order to enable the user to easily determine the channel to be viewed, and the user can starts viewing the desired channel by selecting the channel to be viewed from among the channels displayed in the list to quickly switch the channel.

### Brief Description Of The Drawings

[Fig. 1] A block diagram for showing the overall configuration of a television broadcast viewing system in accordance with an embodiment.
[Fig. 2] A view for explaining the assignment of a CM time length network program to a television channel in accordance with the embodiment.
[Fig. 3] Fig. 3 is a block diagram for showing the configuration of the channel management unit 13 of a television broadcast viewing system in accordance with the embodiment.
[Fig. 4] Fig. 4 is a block diagram for showing the configuration of the content server 5 in accordance with the embodiment for distributing the viewing rate report program.
[Fig. 5] Fig. 5 is a view for explaining the structure of a report content 211 in accordance with the embodiment.
[Fig. 6] Fig. 6 is a view for explaining the operation of a pop-up window in accordance with the embodiment.
[Fig. 7] Fig. 7(a) is a flow chart for showing the operation of the television broadcast viewing system in accordance with the embodiment, and Fig. 7(b) is a flow chart for showing the procedure of the method of viewing the viewing rate report program.

### Best Mode for Carrying Out the Invention

### (Overall Configuration of Television Broadcast Viewing System)

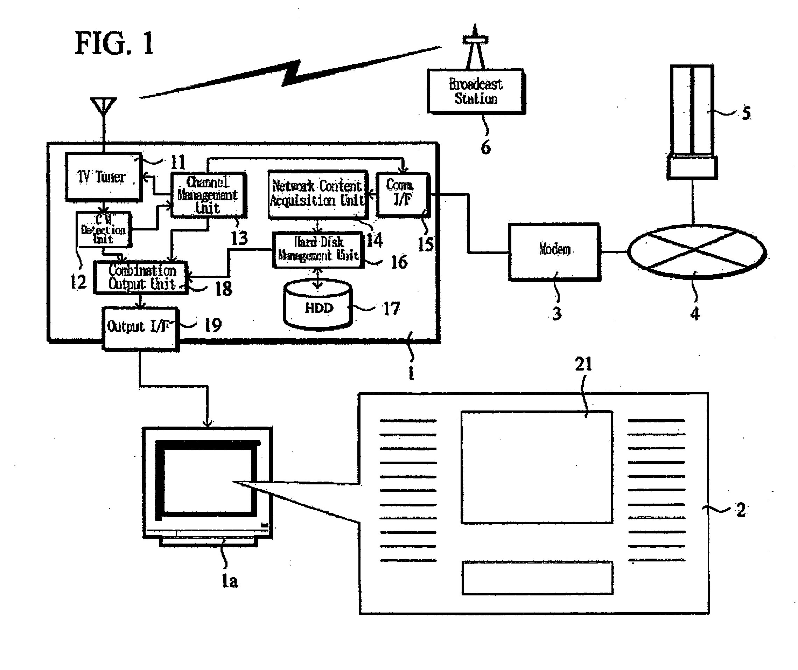

An embodiment of the present invention will be explained with reference to the accompanying drawings. In the case of the present embodiment, the viewing rate report system and the television broadcast viewing system of the present invention will be explained by an example. Fig. 1 is a block diagram for showing the overall configuration of the television broadcast viewing system in accordance with the present embodiment.

As shown in the same figure, the television broadcast viewing system of the present embodiment is generally composed of a terminal device 1 provided with a monitor 1a, a terminal equipment 3 to be connected with an IP network 4, a broadcast station 6 serving to broadcast via radio waves, a content server 5 located in the IP network 4.

The IP network 4 is a distributed communication network which is constructed by connecting a variety of communication lines (a telephone line, an ISDN line, a public network such as an ADSL line, a dedicated communication line, and a radio communication network) to each other by the use of the communication protocol TCP/IP. This IP network 4 may be a LAN such as an intranet (a network within a company) based on 10BASE-T, 100BASE-TX or the like.

The terminal equipment 3 is an equipment for connecting the terminal device 1 with the IP network 4, and includes a modulator demodulator device such as a modem for converting digital data into a voice signal and vice versa when connecting a telephone line, a signal conversion device such as an ADSL modem for converting an ADSL signal into a LAN signal and vice versa when connecting an ADSL line, a DSU and a terminal adapter which are required for connecting an ISDN line, and so forth.

The content server 5 is a server computer or software capable of transmitting network content such as HTML (HyperText Markup Language) files, image files, music files and the like as WWW (World Wide Web) documents, and serves to accumulate information such as HTML files and image files and transmit the information in response to a request from client software through the IP network 4 such as the Internet. In addition to this, the content server 5 in accordance with the present embodiment is provided with the functionality of collecting the information about the channel (broadcast program or network content) each user is viewing, calculating the audience rating of each channel, and reporting the audience rating.

### (Terminal Device 1)

The terminal device 1 is an arithmetic operation unit provided with a CPU and can be implemented by a general purpose computer, for example, a personal computer, or a set-top box having specific capabilities. The monitor 1a is a display device such as a liquid crystal display, a CRT display, a plasma display or the like, and connected with the terminal device 1 through the output interface 19 in order to output videos and sounds. Incidentally, this monitor 1a may be a television receiver in the case where the terminal device 1 is a set-top box.

More specifically speaking, the terminal device 1 is provided with a television tuner unit 11 with which broadcast content can be received via radio waves, a CM detection unit 12 for detecting a CM broadcast in the broadcast content, which is being viewed, a network content acquisition unit 14 for acquiring network content, which is distributed through the IP network 4, by a communication interface 15, a channel management unit 13 for controlling the channel to be viewed, a combination output unit 18 for switchingly outputting the network content and the broadcast content to the monitor 1a, a hard disk management unit 16 for recording the network content and the broadcast content, and a hard disk drive 17.

The television tuner unit 11 is a circuit for providing a so-called tuner function capable of receiving broadcast signals, modulating these reception radio wave signals, converting these signals into predetermined digital signals, and outputting the predetermined digital signals, and makes it possible to receive the broadcast content on either channel of ground wave broadcasts, satellite broadcasts, cable TV broadcasts, radio broadcasts and the like by changing the frequency. The frequency which is received by this television tuner unit 11 is changed by a control signal which is output from the channel management unit 13 on the basis of user manipulation. Also, the received signal of this television tuner unit 11 is output to the combination output unit 18, and also can be recorded in the hard disk by the hard disk management unit 16.

Incidentally, while the television tuner unit 11 receives radio waves through an antenna which is incorporated in (or attached to) the circuit, it is also possible for example to provide a television antenna connection terminal so that the television tuner unit 11 receives broadcast signals through a coaxial cable and the like which connects it with another antenna. Also, in the case of the present embodiment, this television tuner unit 11 is implemented as a circuit which is fixedly incorporated within the terminal device 1. However, it can be replaced with an adapter device which is provided with an interface in conformity with a data transmission standard such as USB and detachably attached to a USB interface (USB terminal) of the terminal device 1.

The CM detection unit 12 is a module for detecting the CM portion (start and end) of the broadcast content. As a method of detecting a CM by this CM detection unit 12 among a variety of similar methods, it is thought to monitor the sound volume and luminance value of broadcast content and determine the start and end of the CM when these values significantly vary. Meanwhile, another example of CM detecting methods is such that a CM is detected by installing a server in the IP network 4 for distributing the data indicative of the start and end times of the respective CMs of each channel, and detecting a CM in accordance with the report from this server.

The network content acquisition unit 14 is a module for receiving network content such as motion picture delivery and HTML files as described above through the terminal equipment 3 by the use of a communication protocol such as TCP/IP. The communication interface 15 is an interface for communicating with the terminal equipment 3, and implemented as a wireless interface such as a LAN card in conformity with a wireless LAN standard such as IEEE802.11b.

In the case of the present embodiment, the combination output unit 18 is provided with the functionality of invoking and running browser software which is run in the terminal device 1, and the browser software downloads HTML (HyperText Markup Language) files, image files, music files and the like delivered from the content server 5 located on the IP network 4, parses the layout to display and play back them, browses a Web page 2, and combines and outputs broadcast content and network content (images and motion pictures) within the Web page 2. More specifically speaking, the tabs included in a Web page (HTML file) delivered by the content server 5 are parsed to produce the television screen 21, in which images and motion pictures (broadcast content or network content) are inserted, and combine a video or the like in this screen.

In addition to this, the combination output unit 18 is provided with the functionality of outputting broadcast content or network content assigned to the television channel selected by the user manipulation through the monitor 1a on the basis of a switching control signal acquired from the channel management unit 13.

The channel management unit 13 is a module for determining to which television channel the broadcast content received through the television tuner unit 11 and the network content acquired by the network content acquisition unit 14 are assigned, receiving user manipulation of a remote control and the like, and outputting the network content acquired through the combination output unit 18.

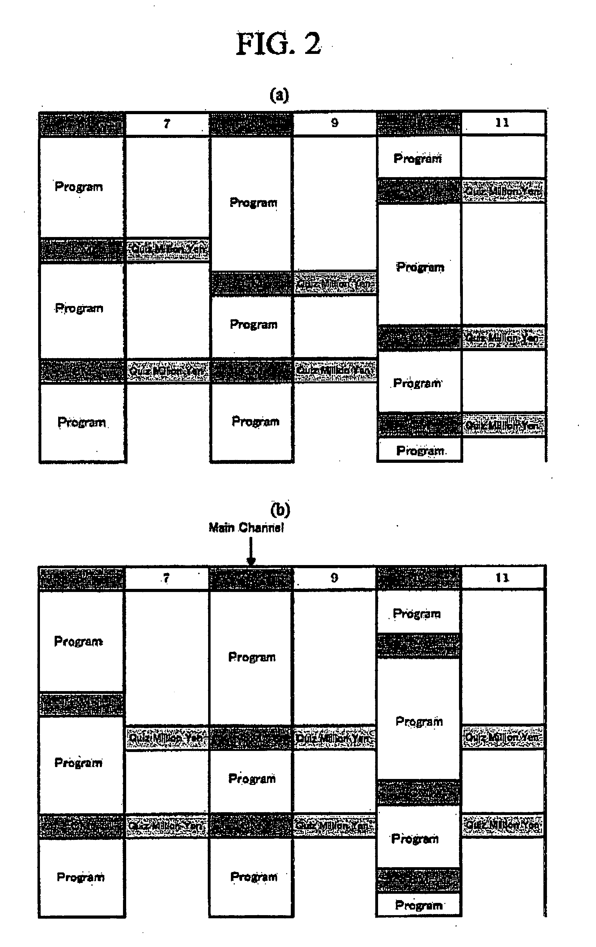

In particular, the channel management unit 13 is provided with the functionality of assigning, to the television channel to which no television broadcast frequency is assigned as illustrated in Fig. 2, a noticeable piece of content among network content (hereinafter referred to as "CM time length network program") such as million yen quiz which can be viewed during the CM time, while the CM detection unit 12 is detecting a CM.

More specifically speaking, the channel management unit 13 is provided with a channel switching unit 131, a manipulation signal receiving unit 132, a viewing channel detecting unit 133, a zapping determination unit 135, a channel assigning unit 136, and a viewing channel report unit 134.

The channel assigning unit 136 is a module for determining to which television channel the broadcast content received by the television tuner unit 11 and the network content acquired by the network content acquisition unit 14 are assigned. Particularly, this channel assigning unit 136 serves to assign the CM time length network program such as million yen quiz to the television channel, to which no television broadcast frequency is assigned, while the CM detection unit 12 is detecting a CM.

In the case of the present embodiment, as shown in Fig. 2(a), the channel to which this CM time length network program is assigned is a television channel which is adjacent to the television channel on which a CM is detected. Particularly, the assignment to this channel may be performed as shown in Fig. 2(b) such that the same CM time length network program is assigned to the television channel, to which no television broadcast frequency is assigned, in correspondence with the CM broadcasting time slot of the current channel.

The manipulation signal receiving unit 132 is a module for receiving the manipulation signals from manipulation devices a remote control, channel buttons, a mouse, a keyboard and the like, and outputting the manipulation signals to the viewing channel detecting unit 133. The viewing channel detecting unit 133 is a module for detecting which channel is displayed on the monitor 1a on the basis of the manipulation signal which is received by the manipulation signal receiving unit 132. Furthermore, the detection result by the viewing channel detecting unit 133 is output to the zapping determination unit 135 for use in the zapping detection.

The viewing channel information as detected is output to the channel switching unit 131 for controlling the combination output of the combination output unit 18, and output to the viewing channel report unit 134 which sends the viewing channel information to the content server 5 through the communication interface 15. The viewing channel report unit 134 is a module for transmitting, to the content server 5 through the IP network 4, the channel identifier for identifying the broadcast content or network content which is output from the combination output unit 18.

The zapping determination unit 135 measures the time of viewing the same television channel, and determines the channel as a main channel (viewing channel) if the viewing time is longer than a predetermined time, while the current viewing is determined as zapping viewing if the viewing time is no longer than a predetermined time. This zapping detection result is output to the CM detection unit 12. When it is determined that the current viewing is not zapping viewing, the CM detection unit 12 performs detection of a CM on the current television channel. By this process, while ignoring a CM broadcast as it happens during zapping, a CM broadcast is detected only during viewing a main channel (viewing channel) which has been viewed for the predetermined time or longer.

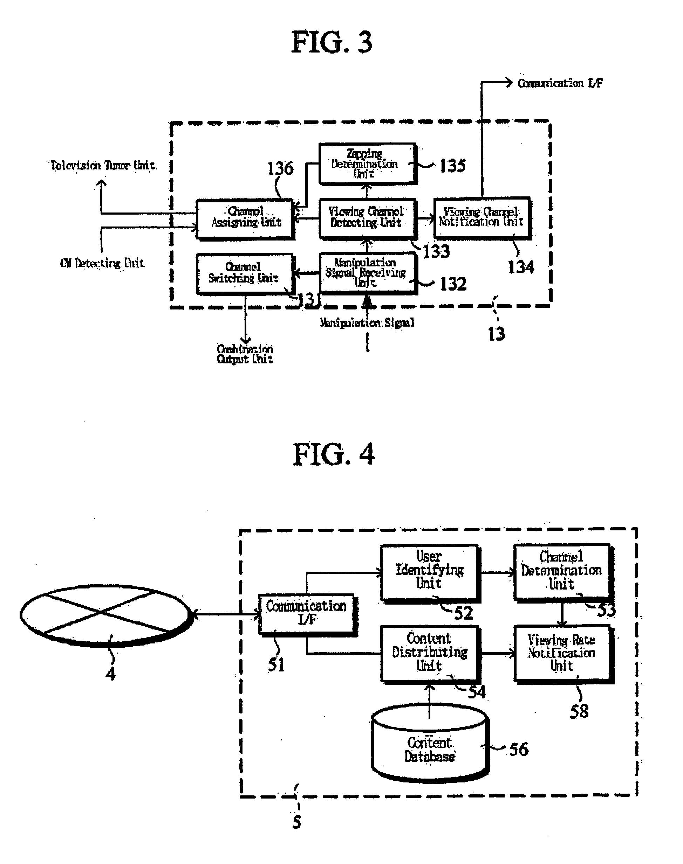

(Contents Server 5) As shown in Fig. 4, the content server 5 is provided with a communication interface 51 for connecting the IP network 4, a user identifying unit 52 for identifying the accessing user, a channel determination unit 53 for determining the channel the user views, a content distributing unit 54 and a content database 56 for distributing a viewing rate report program, and a viewing rate report unit 58 for calculating a viewing rate on a real time base and generating report content.

The communication interface 51 is a communication device for connecting the IP network 4, and serves to perform the transmission and reception between the terminal device 1 of each user and the terminal device 1 by transmission and reception of packet data. The user identifying unit 52 is a module for acquiring the IP address of a user and a user identifier such as a user ID for identifying the user. The channel determination unit 53 is a module for identifying the channel the user is viewing with reference to the viewing channel which is reported from the viewing channel report unit 134 of the terminal device 1 of each user.

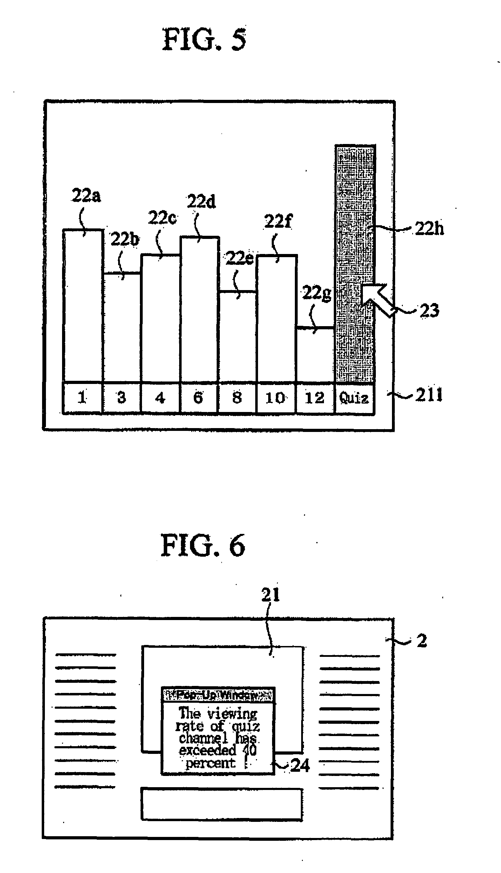

The viewing rate report unit 58 collects the viewing channels of the respective users acquired by the channel determination unit 53, calculates the viewing rate of each channel at the present time, generates report content 211 represented by a bar graph of rectangular bars 22a to 22h and so forth as illustrated in Fig. 5 and transmits the content 211 to the content distributing unit 54. The content distributing unit 54 distributes the report content to the respective terminal devices 1.

Viewing this report content may be made possible at the respective terminal devices, for example, by broadcasting the report content in a time slot of the above described unused channels other than the time slot for the CM time length network program, providing a dedicated channel for reporting the viewing rate, or opening a particular pop-up interface 24 in the screen as illustrated in Fig. 6. Meanwhile, as shown in Fig. 5, the report content 211 in accordance with the present embodiment includes the bar graph of rectangular bars 22a to 22h corresponding to the respective channel numbers, and an arbitrary channel can be selected by clicking the rectangular bar corresponding to this arbitrary channel with a pointing device 23 such as a mouse. The manipulation with this pointing device 23 is input to the above manipulation signal receiving unit 132 as a manipulation signal, and thereby the channel can be switched to the selected channel.

### (Television Broadcast Viewing Method)

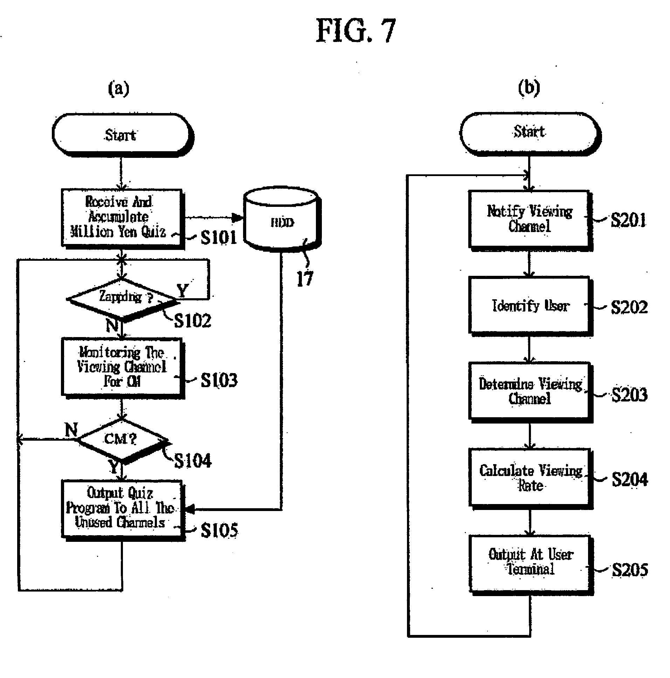

Then, the television broadcast viewing method in accordance with the present embodiment is performed by the procedure as shown in Fig. 7(a).

First, the television tuner unit 11 receives broadcast content which is broadcasted from the broadcast station 6, and the network content acquisition unit 14 acquires network content (the Web page 2 and the CM time length network program "million yen quiz") from the content server 5 in step S101. The broadcast content is received by the television tuner unit 11, converted into a predetermined digital signal, and then output to the combination output unit 18 and the hard disk management unit 16, and the converted content can be stored in the hard disk drive 17. On the other hand, the network content is received by the network content acquisition unit 14 and accumulated in the hard disk drive 17, while the network content is transmitted to the browser software of the combination output unit 18. In the combination output unit 18, the broadcast content or network content is combined with the Web page by the browser software, and output.

Then, the zapping determination unit 135 measures the time of viewing the same television channel, and determines whether or not it is zapping viewing in step S102. Namely, if the viewing time is longer than a predetermined time, it is determined that the current viewing is not zapping viewing (i.e., the "N" branch from step S102), and monitoring the current television channel for a CM is started in step S103.

In step S104, the CM detection unit 12 determines whether or not a CM is broadcasted on the viewing channel. If no CM is broadcasted, monitoring is continued. On the other hand, if it is determined that a CM is broadcasted in step S104, the CM time length network program ("million yen quiz") is assigned in step S105 to the television channel (channel 7, 9, 11.. in Fig. 2) to which no television broadcast frequency is assigned during the time that the CM is detected by the CM detection unit 12 in step S105, such that this program can be viewed with the monitor 1a by user's switching manipulation.

By this process, when the main channel really viewed by the user is switched to another channel, zapping from the main channel is determined to start outputting the CM time length network program in correspondence with the CM program of the main channel, but when a zapping channel is switched to a further channel, the CM time length network program is not output (or not output again during zapping).

Then, when viewing the television broadcast as described above, the viewing rate report method in accordance with the present invention is applied. Fig. 7(b) is a flow chart for showing the procedure of the method of viewing the viewing rate report program in accordance with the present embodiment.

The channel currently viewed at each terminal device is reported to the content server 5 by the viewing channel report unit 134 in step S201, the content server 5 identifies the user by means of the user identifying unit 52 in step S202, and the channel determination unit 53 determines the channel number currently viewed by the user in step S203. Next, the viewing rate report unit 58 calculates the current viewing rate in step S204 and generates the report content 211, which is transmitted to the respective terminals through the content distributing unit 54 and output at the user terminals for viewing it in step S205.

When viewing this report content, an arbitrary channel can be selected by clicking the rectangular bar corresponding to this arbitrary channel on the report content 211 with a pointing device 23 such as a mouse, and this selection manipulation is input to the above manipulation signal receiving unit 132 as a manipulation signal so that the channel can be switched to the selected channel.

### (Actions/Effects)

In accordance with the present embodiment as has been discussed above, it is possible to distribute noticeable information having a time length which can be viewed during the CM time slot on the television channel, to which no television broadcast frequency is assigned, in correspondence with the CM broadcasting time slot of the current television broadcast, and to reduce the frequency of switching due to zapping viewing.

Particularly, the viewing rate of each channel is represented with a vertical bar at the user terminal on the basis of the report content 211, and thereby it is possible to know the channel having the highest viewing rate at the present time, and easily switch the channel to the channel desired to view only by clicking the vertical bar corresponding to the desired channel.

### Industrial Applicability

In the case of the viewing style of combining the distribution information distributed from the Internet according to the viewing rate report system and viewing rate report method of the present invention, it is possible to collect and report the viewing rate on a real time base, and the user can easily select a program or content to be viewed.

## Claims

1. A viewing rate report system for reporting a viewing rate in a television broadcast viewing system for viewing and listening video and sound by a terminal device provided with a display unit, comprising:
a television tuner unit operable to receive broadcast content which is broadcasted through radio waves;
a network content acquisition unit operable to acquire network content which is distributed through an IP network;
a combination output unit operable to output on said display unit said broadcast content or network content assigned to the channel which is selected;
a viewing channel report unit operable to transmit through said IP network a channel identifier for identifying said broadcast content or network content which is output from said combination output unit; and
a viewing rate report unit located on said IP network and operable to collect said channel identifier transmitted from a plurality of viewing channel report units, calculate the viewing rate, report information on the viewing rate as calculated through said IP network.

2. The viewing rate report system as claimed in claim 1 wherein said network content acquisition unit is operable to acquire the information on said viewing rate which is reported by said viewing rate report unit, and output the information to the combination output unit as said network content.

3. The viewing rate report system as claimed in claim 1 further comprising:
a viewing rate output unit operable to display a list of said viewing rate in association with channels; and
a channel switching unit operable to switch the content to be output from said combination output unit on the basis of the user manipulation of selecting a channel from said list as displayed.

4. A viewing rate report method for reporting a viewing rate in a television broadcast viewing system for viewing and listening video and sound by a terminal device provided with a display unit, comprising:
a step (1) of receiving broadcast content which is broadcasted through radio waves, and acquiring network content which is distributed through an IP network;
a step (2) of outputting on said display unit said broadcast content or network content assigned to the television channel which is selected;
a step (3) of transmitting through said IP network a channel identifier for identifying said broadcast content or network content which is output from said display unit; and
a step (4) of collecting said channel identifier transmitted from a plurality of viewing channel report units on said IP network, calculating the viewing rate, reporting information on the viewing rate as calculated through said IP network.

5. The viewing rate report method as claimed in claim 4 wherein the information on said viewing rate, which is reported by said viewing rate report unit in said step (4), is acquired and output to a combination output unit as said network content.

6. The viewing rate report method as claimed in claim 4 further comprising:
a step of displaying a list of said viewing rate in association with channels; and
a step of switching the content to be output from said display unit on the basis of the user manipulation of selecting a channel from said list as displayed.
